# EUROPÄISCHE PATENTSCHRIFT

(11) **EP 1 859 334 B1**
(45) Veröffentlichungstag und Bekanntmachung des Hinweises auf die Patenterteilung: **15.12.2010**
(21) Anmeldenummer: 06708471.5
(22) Anmeldetag: 23.02.2006
(51) Int. Cl.: G06F 1/00

(54) **BERÜHRUNGSEMPFINDLICHER BILDSCHIRM MIT HAPTISCHER RÜCKMELDUNG**
TOUCH-SENSITIVE SCREEN WITH HAPTIC ACKNOWLEDGEMENT
ECRAN TACTILE A RETROSIGNAL HAPTIQUE

(30) Priorität: 14.03.2005 DE 102005011633
(43) Veröffentlichungstag der Anmeldung: 28.11.2007
(73) Patentinhaber: Continental Automotive GmbH, 30165 Hannover (DE)
(72) Erfinder: NAU, Dieter, 35578 Wetzlar (DE); KLEIN, Martin, 35638 Leun (DE)
(86) Internationale Anmeldenummer: PCT/EP2006/060211
(87) Internationale Veröffentlichungsnummer: WO 2006/097400

(56) Entgegenhaltungen:
- DE-A- 10 100 931
- US-A1- 2002 033 795
- PATENT ABSTRACTS OF JAPAN Bd. 1997, Nr. 10, 31. Oktober 1997 (1997-10-31) -& JP 09 167541 A (IDEC IZUMI CORP), 24. Juni 1997 (1997-06-24)
- PATENT ABSTRACTS OF JAPAN Bd. 2003, Nr. 06, 3. Juni 2003 (2003-06-03) -& JP 2003 058321 A (FUJI XEROX CO LTD), 28. Februar 2003 (2003-02-28)

## Beschreibung

/Die Erfindung betrifft einen berührungsempfindlichen Bildschirm mit einer haptischen Rückmeldung nach dem Oberbegriff des Anspruchs 1.

Berührungsempfindliche Bildschirme, die auch unter der Bezeichnung Touchscreen bekannt sind, bestehen aus einer Kombination einer Anzeigevorrichtung mit einer darüber angeordneten lichtdurchlässigen, berührungsempfindlichen Bedienvorrichtung. Die berührungsempfindliche Bedienvorrichtung, die auch unter der Bezeichnung Touchpad bekannt ist, erzeugt bei Berührung mit einem Finger oder einem Stift ein elektrisches Signal, das in einen Befehl umgesetzt werden kann, beispielsweise zur Verschiebung eines Cursors auf der Anzeigevorrichtung oder zur Auswahl eines Menüpunktes. Derartige Touchscreens und Touchpanels sind hinreichend bekannt.

Da berührungsempfindliche Bildschirme im Gegensatz zu herkömmlichen Tasten keinen Druckpunkt aufweisen, ist es für den Bediener häufig unklar, ob die von ihm vorgenommene Betätigung erkannt wurde. Um dem Bediener eine diesbezügliche Rückmeldung zu geben, sind bereits berührungsempfindliche Bildschirme mit haptischer Rückmeldung bekannt. So ist in der DE 101 54 643 A1 eine Bedienvorrichtung für einen bildschirmgesteuerten Prozess beschrieben, die ein berührungsempfindliches Eingabefeld aufweist. Für die Rückmeldung weist die Bedienvorrichtung einen Elektromotor auf, der mit einem Exenter verbunden ist. Alternativ kann das Eingabefeld auch mittels Ultraschall in Vibrationen versetzt werden. In der Ausgestaltung als Touchscreen bilden der Anzeigebereich und der Eingabebereich eine bauliche Einheit.

Aus der US 2003/0184574 A1 ist ein berührungsempfindlicher Bildschirm bekannt, bei dem eine berührungsempfindliche Anordnung in Abstand zu einer Anzeigevorrichtung auf einer Platte angeordnet ist. Ein oder mehrere Aktuatoren sind mit der Platte verbunden und dienen zur Erzeugung einer haptischen Rückmeldung bei Berühren der Platte. Die haptische Rückmeldung erfolgt in Form von Vibrationen oder Pulsen.

Bei einem derartigen berührungsempfindlichen Bildschirm wird somit ein lichtdurchlässiges, das heißt durchsichtiges, Touchpanel so vor der Anzeigevorrichtung platziert, dass die auf der Bildseite der Anzeigevorrichtung dargestellten grafischen Elemente oder alphanumerischen Zeichen direkt hinter den Schaltflächen der berührungsempfindlichen Anordnung liegen und durch diese hindurch sichtbar sind. Hierbei ist ein geringer Abstand zwischen der berührungsempfindlichen Anordnung und der Bildseite der Anzeigevorrichtung erforderlich, um negative optische Effekte zu vermeiden, wobei es sich beispielsweise um einen Versatz der optischen Achse (Paralaxefehler) oder eine Bildunschärfe handeln kann. In den Zwischenraum zwischen der Bildseite der Anzeigevorrichtung und der berührungsempfindlichen Anordnung kann nun Staub oder Schmutz eindringen, der das optische Erscheinungsbild beeinträchtigt. Auch das Eindringen von Feuchtigkeit mit einem daraus resultierenden Beschlagen der Anzeigevorrichtung kann insbesondere bei Verwendung in Kraftfahrzeugen eintreten.

Aus Patent Abstracts of Japan, Bd. 1997, Nr. 10 und JP 09167541 A ist ein berührungsempfindlicher Bildschirm mit haptischer Rückmeldung bekannt, bei dem der berührungsempfindliche Bildschirm bewegt wird.

Aufgabe der Erfindung ist es daher, einen berührungsempfindlichen Bildschirm mit haptischer Rückmeldung derart weiterzuentwickeln, dass die oben genannten Nachteile zumindest weitgehend vermieden werden und der berührungsempfindliche Bildschirm auch im Alltagseinsatz durch Umwelteinflüsse möglichst wenig beeinflusst wird.

Die Aufgabe wird durch einen berührungsempfindlichen Bildschirm mit den Merkmalen des Anspruchs 1 gelöst.

Der berührungsempfindliche Bildschirm weist eine Anzeigevorrichtung und eine lichtdurchlässige, berührungsempfindliche

Anordnung auf. Die berührungsempfindliche Anordnung ist vor einer Bildseite der Anzeigevorrichtung und in Abstand zu der Anzeigevorrichtung angeordnet und zur Erzeugung einer haptischen Rückmeldung relativ zur Anzeigevorrichtung bewegbar. Weiterhin ist die berührungsempfindliche Anordnung Bestandteil eines die Anzeigevorrichtung umschließenden Gehäuses, wobei das Gehäuse mit der berührungsempfindlichen Anordnung relativ zur Anzeigevorrichtung bewegbar ist.

Hierdurch wird ein robuster berührungsempfindlicher Bildschirm zur Verfügung gestellt, der für den Alltagseinsatz, insbesondere bei Verwendung als Kraftfahrzeugkomponente, geeignet ist, wobei das Eindringen von Staub oder Schmutz zwischen die Bildseite der Anzeigevorrichtung und die berührungsempfindliche Anordnung zumindest weitgehend vermieden wird.

Vorzugsweise ist das Gehäuse staubdicht ausgebildet. Dies kann erreicht werden, indem zum Beispiel Öffnungen, die zur Herausführung von Anschlusskabeln oder von Befestigungselementen erforderlich sind, mit elastischen Manschetten versehen werden, die eng an den Kabeln bzw. Herausführungen und am Gehäuse anliegen.

In einer bevorzugten Ausführungsform ist das Gehäuse in einer parallel zur Bildseite der Anzeigevorrichtung verlaufenden Ebene linear bewegbar. Da bei dieser Ausgestaltung der Abstand zwischen der berührungsempfindlichen Anordnung und der Anzeigevorrichtung auch bei der haptischen Rückmeldung stets unverändert bleibt, kann ein besonders enger Spalt zwischen der Anzeigevorrichtung und der berührungsempfindlichen Anordnung realisiert werden. Dies wiederum wirkt sich vorteilhaft auf das optische Erscheinungsbild aus. Zusätzlich wird ein versehentlicher Kontakt zwischen der berührungsempfindlichen Anordnung und der Anzeigevorrichtung, wie er bei haptischer Rückmeldung durch Vibration oder einer Bewegung der berührungsempfindlichen Anordnung in Richtung der Anzeigevorrichtung auftreten kann, sicher vermieden. Weiterhin hat sich gezeigt, dass eine solche seitliche Bewegung der berührungsempfindlichen Anordnung relativ zur Anzeigevorrichtung vom Bediener sehr gut wahrgenommen wird.

In einer Ausführungsform ist das Gehäuse eindimensional linear relativ zur Anzeigevorrichtung bewegbar. Eine eindimensionale Bewegung ist als haptische Rückmeldung völlig ausreichend und kann einfacher realisiert werden als eine zweidimensionale Bewegung.

In einer Ausführungsform ist das Gehäuse linear beweglich auf einem Trägerelement angeordnet, wobei insbesondere Mittel zum Führen einer Bewegung des Gehäuses relativ zum Trägerelement vorhanden sind. Durch die Führungsmittel ist eine sichere und definierte Bewegung des Gehäuses gewährleistet. Auch bei Erschütterungen, wie sie insbesondere bei Verwendung des berührungsempfindlichen Bildschirms als Kraftfahrzeugkomponente im Betrieb laufend auftreten, wird durch die Führung eine stabile Anordnung des Gehäuses gewährleistet, jedoch gleichzeitig eine Linearbewegung für die haptische Rückmeldung ermöglicht.

In einer Ausführungsform ist auch die Anzeigevorrichtung auf dem Trägerelement befestigt. Die Anzeigevorrichtung ist hierbei starr oder weitgehend starr auf dem Trägerelement befestigt, so dass eine Verschiebung der Anzeigerichtung vermieden wird. Zur Befestigung der Anzeigevorrichtung auf dem Trägerelement sind vorzugsweise Befestigungselemente vorgesehen, die durch Öffnungen des Gehäuses hindurch gehen. Um die Staubdichtigkeit des Gehäuses zu gewährleisten sind diese Öffnungen, wie oben bereits ausgeführt, wiederum vorzugsweise mit elastischen Manschetten, die die Befestigungselemente umgeben, verschlossen.

Bei der Anzeigevorrichtung handelt es sich insbesondere um eine Flüssigkristallanzeige. Derartige Flüssigkristallanzeigen sind hinreichend bekannt und haben sich auch für die Verwendung in Kraftfahrzeugen hinreichend bewährt. Insbesondere eine plane Oberfläche der Bildseite der Flüssigkristallanzeige ist für die Verwendung in dem erfindungsgemäßen berührungsempfindlichen Bildschirm von Vorteil.

Die Erfindung wird nachfolgend anhand eines Ausführungsbeispiels und der Zeichnung näher erläutert. Es zeigen:
- Figur 1: einen Schnitt durch einen erfindungsgemäßen berüh- rungsempfindlichen Bildschirm,
- Figur 2: eine perspektivische Ansicht eines berührungsemp- findlichen Bildschirms mit der die berührungsemp- findliche Anordnung aufweisende Vorderseite,
- Figur 3: eine perspektivische Ansicht der Rückseite eines berührungsempfindlichen Bildschirms mit Führungs- und Befestigungselementen.

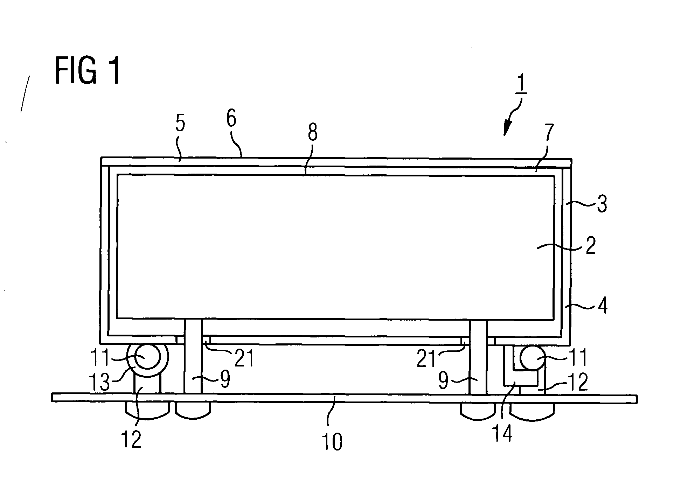

Figur 1 zeigt einen schematischen Querschnitt durch einen berührungsempfindlichen Bildschirm gemäß der Erfindung. Der berührungsempfindliche Bildschirm 1 weist eine Anzeigevorrichtung 2 auf, die von einem Gehäuse 3 umgeben ist. Das Gehäuse 3 besteht aus einer Wanne 4 und einer als Deckel dienenden Platte 5, die eine berührungsempfindliche Anordnung 6 enthält. Als berührungsempfindliche Anordnung 6 können alle bekannten derartigen lichtdurchlässigen Anordnungen, unabhängig von ihrer speziellen Ausgestaltung, eingesetzt werden. Derartige Anordnungen sind auch hinreichend bekannt und müssen daher hier nicht näher beschrieben werden.

Die Platte 5 mit der berührungsempfindlichen Anordnung 6 ist mit Abstand zu der Anzeigevorrichtung 2 angeordnet, so dass zwischen der Anzeigevorrichtung 2 und der Platte 5 ein Spalt 7 entsteht.

Die Anzeigevorrichtung ist als Flüssigkristallanzeige (LCD) ausgebildet. Flüssigkristallanzeigen sind ebenfalls hinreichend bekannt und müssen nicht näher beschrieben werden. Insbesondere kommen hier kommerziell erhältliche Flüssigkeitsanzeigen zum Einsatz. Die Anzeigevorrichtung 2 weist eine Bildseite 8 auf, die der Platte 5 mit der berührungsempfindlichen Anordnung 6 zugewandt ist. Durch die lichtdurchlässig ausgebildete Platte 5 mit ebenfalls lichtdurchlässig ausgebildeter berührungsempfindlicher Anordnung 6 kann ein Betrachter die auf der Bildseite 8 der Anzeigevorrichtung 2 dargestellten Symbole und/oder alphanumerischen Zeichen betrachten und beispielsweise durch Berühren der berührungsempfindlichen Anordnung 6 eines der dargestellten Symbole auswählen, wodurch beispielsweise ein bestimmter Befehl umgesetzt wird.

Die Anzeigevorrichtung 2 ist durch Befestigungselemente 9 starr mit einem Trägerelement 10 verbunden. Die Befestigungselemente 9 ragen hierbei durch Öffnungen 21 in dem Gehäuse 3 hindurch.

Auf dem Trägerelement 10 sind weiterhin Führungsstangen 11 mittels weiterer Befestigungselemente 12 in Abstand zu dem Trägerelement 10 angeordnet. Die Führungsstangen 11 greifen in Ösen 13 und Haken 14 des Gehäuses 3 ein. Das Gehäuse 3 mit der die berührungsempfindliche Anordnung 6 aufweisenden Platte 5 ist somit in Längsrichtung der Führungsstangen 11, das heißt senkrecht zur Zeichenebene, linear bewegbar, und zwar relativ zu dem Trägerelement 10 und der mit dem Trägerelement 10 starr verbundenen Anzeigevorrichtung 2.

Durch eine hier nicht gezeigte Antriebsvorrichtung kann eine solche Linearbewegung erfolgen. Bei der Antriebsvorrichtung kann es sich insbesondere um einen konventionellen Rotationsmotor mit entsprechender Ansteuerung, um einen Linearmotor oder auch einen Schrittmotor handeln, oder auch um piezoelektrische Verstellelemente. Die erforderlichen Amplituden sind mit üblicherweise wenigen Millimetern dabei sehr gering. Im Ausführungsbeispiel beträgt die Amplitude lediglich 1mm, entsprechend einer Auslenkung von ±0,5mm aus der Ruhelage.

Über hier nicht dargestellte elektrische Anschlusselemente sind die berührungsempfindliche Anordnung und die Anzeigevorrichtung mit einer Auswerte- bzw. Steuereinrichtung verbunden.

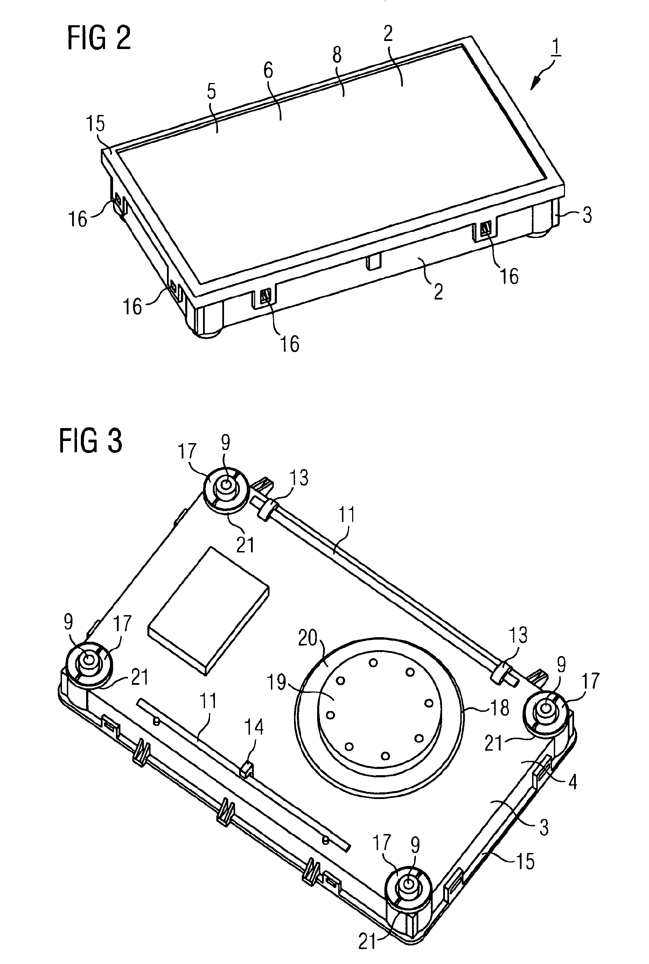

Figur 2 zeigt den berührungsempfindlichen Bildschirm 1 in einer perspektivischen Ansicht. Die Platte 5 mit der berührungsempfindlichen Anordnung 6 und der in geringem Abstand darunter angeordneten Bildseite 8 der Anzeigevorrichtung 2 sind einem Bediener zugewandt. Die Platte 5 wird von einem Rahmen 15 gehalten und mit diesem an der Wanne 4 befestigt. Die Verbindung des Rahmens 15 mit der Wanne 4 erfolgt mittels Rastverbindungen 16. Durch ein elastisches Dichtelement wird das Eindringen von Staub zwischen dem Rahmen 15 und der Wanne 4 vermieden.

Figur 3 zeigt eine weitere perspektivische Ansicht des berührungsempfindlichen Bildschirms von einer Rückseite betrachtet. Die Wanne 4 des Gehäuses 3 weist Ösen 13 und Haken 14 auf, in denen Führungsstangen 11 befestigt sind. Die Führungsstangen 11 werden, wie in Figur 1 gezeigt, durch Befestigungselemente 12 an dem Trägerelement 10 befestigt. Vier Befestigungselemente 9 der im Inneren des Gehäuses 3 angeordneten Anzeigevorrichtung 2 ragen durch Öffnungen 21 des Gehäuses 3 hindurch und sind zur starren Befestigung der Anzeigevorrichtung 2 auf dem hier nicht dargestellten Trägerelement vorgesehen. Weiterhin sind in den Öffnungen 21 Dichtelemente 17 vorgesehen, die das Gehäuse 3 gegen die Befestigungselemente 9 abdichten.

In einer weiteren Öffnung 18 des Gehäuses 3 ist eine Leiterplatte 19 angeordnet, wobei auch hier der verbleibende Raum in der Öffnung 18 durch ein weiteres Dichtelement 20 geschlossen wird.

Wird nun die Anzeigevorrichtung mittels der Befestigungselemente 9 starr mit einem Trägerelement verbunden, so kann das Gehäuse 3 mittels einer nicht dargestellten Antriebsvorrichtung relativ zu der Anzeigevorrichtung 2 entlang der Führungsstangen 11 zur Erzeugung einer haptischen Rückmeldung bewegt werden. Die Bewegung wird dabei vorzugsweise als Hin- und Herbewegung entlang der Führungsstangen 11 erfolgen, die ihrerseits fest an einem Trägerelement angeordnet sind.

Mit der Erfindung wird ein berührungsempfindlicher Bildschirm zur Verfügung gestellt, der eine haptische Rückmeldung aufweist und zudem für den Alltagsbetrieb geeignet ist.

## Patentansprüche

1. Berührungsempfindlicher Bildschirm (1) mit einer Anzeigevorrichtung (2) und einer vor einer Bildseite (8) der Anzeigevorrichtung (2) und in Abstand zu der Anzeigevorrichtung (2) angeordneten lichtdurchlässigen, berührungsempfindlichen Anordnung (6), die zur Erzeugung einer haptischen Rückmeldung relativ zur Anzeigevorrichtung (2) bewegbar ist, wobei die berührungsempfindliche Anordnung (6) Bestandteil eines die Anzeigevorrichtung (6) umschließenden Gehäuses (3) ist, **dadurch gekennzeichnet , dass** das Gehäuse (3) mit der berührungsempfindlichen Anordnung (6) relativ zur Anzeigevorrichtung (2) bewegbar ist und das Gehäuse (3) linear beweglich auf einem Trägerelement (10) angeordnet ist und die Anzeigevorrichtung (2) auf dem Trägerelement (10) befestigt ist.

2. Berührungsempfindlicher Bildschirm (1) nach Anspruch 1, **dadurch gekennzeichnet, dass** das Gehäuse (3) in einer parallel zur Bildseite (8) der Anzeigevorrichtung (2) verlaufenden Ebene linear bewegbar ist.

3. Berührungsempfindlicher Bildschirm (1) nach Anspruch 2, **dadurch gekennzeichnet, dass** das Gehäuse (3) eindimensional linear bewegbar ist.

4. Berührungsempfindlicher Bildschirm (1) nach einem der vorhergehenden Ansprüche, **dadurch gekennzeichnet, dass** das Gehäuse (3) staubdicht ist.

5. Berührungsempfindlicher Bildschirm (1) nach einem der vorhergehenden Ansprüche, **gekennzeichnet durch** Mittel zum Führen einer Bewegung des Gehäuses (3) relativ zum Trägerelement (10).

6. Berührungsempfindlicher Bildschirm (1) nach einem der vorhergehenden Ansprüche, **dadurch gekennzeichnet, dass** die Anzeigevorrichtung (2) mittels durch Öffnungen (21) des Gehäuses (3) hindurchgehender Befestigungselemente (9) auf dem Trägerelement (10) befestigt ist.

7. Berührungsempfindlicher Bildschirm (1) nach einem der vorhergehenden Ansprüche, **dadurch gekennzeichnet, dass** die Anzeigevorrichtung (2) eine Flüssigkristallanzeige ist.

8. Berührungsempfindlicher Bildschirm (1) nach einem der vorhergehenden Ansprüche, **gekennzeichnet durch** die Verwendung als Kraftfahrzeugkomponente.

## Claims

1. Touch sensitive screen (1) having a display device (2) and a transparent, touch sensitive arrangement (6) that is arranged upstream of an image side (8) of the display device (2) and at a distance from the display device (2), and can be moved relative to the display device (2) in order to generate haptic feedback, the touch sensitive arrangement (6) being a component of a housing (3) enclosing the display device (2), **characterized in that** the housing (3) with the touch sensitive arrangement (6) can be moved relative to the display device (2), and the housing (3) is arranged in a linearly movable fashion on a support element (10), and the display device (2) is fastened on the support element (10).

2. Touch sensitive screen (1) as claimed in Claim 1, **characterized in that** the housing (3) can be moved linearly in a plane running parallel to the image side (8) of the display device (2).

3. Touch sensitive screen (1) as claimed in Claim 2, **characterized in that** the housing (3) can be moved linearly in one dimension.

4. Touch sensitive screen (1) as claimed in one of the preceding claims, **characterized in that** the housing (3) is dust-tight.

5. Touch sensitive screen (1) as claimed in one of the preceding claims, **characterized by** means for guiding a movement of the housing (3) relative to the support element (10).

6. Touch sensitive screen (1) as claimed in one of the preceding claims, **characterized in that** the display device (2) is fastened on the support element (10) by means of fastening elements (9) passing through openings (21) in the housing (3).

7. Touch sensitive screen (1) as claimed in one of the preceding claims, **characterized in that** the display device (2) is a liquid crystal display.

8. Touch sensitive screen (1) as claimed in one of the preceding claims, **characterized by** use as a motor vehicle component.

## Revendications

1. Ecran tactile (1) comportant un dispositif d'affichage (2) et un système tactile (6) transparent placé devant le côté image (8) du dispositif d'affichage (2) et à une certaine distance du dispositif d'affichage (2), où ledit système tactile (6) peut, pour produire un rétrosignal haptique, se déplacer par rapport au dispositif d'affichage (2) et fait partie intégrante d'un boîtier (3) entourant le dispositif d'affichage (2), **caractérisé par le fait que** le boîtier (3) peut se déplacer avec le système tactile (6) par rapport au dispositif d'affichage (2) et que le boîtier (3) est monté linéairement mobile sur un organe support (10) et que le dispositif d'affichage (2) est fixé sur l'organe support (10).

2. Ecran tactile (1) selon la revendication 1, **caractérisé par le fait que** le boîtier (3) peut se déplacer linéairement dans un plan parallèle au côté image (8) du dispositif d'affichage (2).

3. Ecran tactile (1) selon la revendication 2, **caractérisé par le fait que** le boîtier (3) peut se déplacer linéairement en une dimension.

4. Ecran tactile (1) selon l'une des revendications précédentes, **caractérisé par le fait que** le boîtier (3) est étanche à la poussière.

5. Ecran tactile (1) selon l'une des revendications précédentes, **caractérisé par des moyens** permettant de contrôler un déplacement du boîtier (3) par rapport à l'organe support (10).

6. Ecran tactile (1) selon l'une des revendications précédentes, **caractérisé par le fait que** le dispositif d'affichage (2) est fixé sur l'organe support (10) au moyen d'éléments de fixation (9) passant à travers des ouvertures (21) du boîtier (3).

7. Ecran tactile (1) selon l'une des revendications précédentes, **caractérisé par le fait que** le dispositif d'affichage (2) est un écran à cristaux liquides.

8. Ecran tactile (1) selon l'une des revendications précédentes, **caractérisé par** son utilisation comme constituant de véhicule automobile.
